# EUROPEAN PATENT SPECIFICATION

(11) **EP 0 534 964 B1**
(45) Date of publication and mention of the grant of the patent: **28.05.1997**
(21) Application number: 90915969.1
(22) Date of filing: 31.10.1990
(51) Int. Cl.: G09G 1/00, G06F 3/033

(54) **VISUAL DISPLAY APPARATUS**
ANZEIGEGERÄT
APPAREIL DE VISUALISATION

(30) Priority: 01.11.1989 GB 8924642
(43) Date of publication of application: 07.04.1993
(73) Proprietor: EDEN DESIGN GROUP LIMITED, Macclesfield SK11 OJP (GB)
(72) Inventor: RANDALL, Stephen The Chapel, Cheshire SK10 5XF (GB)
(86) International application number: GB9001669
(87) International publication number: WO9106937

(56) References cited:
- EP-A- 0 091 268
- WO-A-89/09960
- IBM Technical Disclosure Bulletin, vol. 28, no. 2, July 1985, (New York, US) "Method to provide selective display for annotated data"
- New Electronics, vol. 19, no. 17, 2nd September 1986, (London, GB), K. Nolte: "Designing a low-cost monochrome display terminal"

## Description

### FIELD OF THE INVENTION

This invention relates to a visual display apparatus and in particular to a visual display apparatus which can display images on a display means in at least two visually differentiable display modes.

### DESCRIPTION OF THE PRIOR ART

The term display mode refers to the manner in which the display means is controlled to provide the image. When one is using a display means such as a CRT (cathode ray tube) which can only display monochrome images, e.g. black and white, then the display mode will be either monochrome mode, or dither pattern mode when the illusion of mid-tones is needed. Images in each mode will be displayed in monochrome or as a dither pattern, respectively. When one has a grey scale monitor, the display mode could be one of the members of that grey scale, e.g. black, in which case images will be displayed in black. Similarly with a full colour monitor, if the display mode is red, then images will be displayed in red.

When documents are produced on a word processor by a typist, they not infrequently require revision by the author. Commonly this is achieved by printing out a draft of the letter and getting the author to annotate it in manuscript form. In more sophisticated computing environments, the author may have his or her own computer connected to that of the typist, allowing on screen review of the draft and keyboard amendments to be made directly by the author. In some such systems, such as the Wang (Regd. T.M.) Freestyle the author will have in addition a graphics tablet enabling appropriate manuscript annotations to be made for the guidance of the typist or indeed anyone else who might read the document. In widely networked environments, it may be useful to be able to comment on documents produced by others by annotating them using the graphics tablet. One of the problems inherent to such sophisticated prior art systems is that the annotations displayed on the display unit may not be readily and easily distinguishable from the underlying displayed material which is annotated.This may be inconvenient and confusing to the reader. Similarly, allowing different annotations to be clearly differentiable from one another has not been directly provided for. Reference may also be made to IBM Technical Disclosure Bulletin, vol. 28, no. 2, July 1985 (New York, US), "Method to provide selective display for annotated data". In the IBM system, the annotation actually overlies the data to be annotated. That may be inconvenient since a user cannot simultaneously compare the annotated and the original data.

### OBJECTS OF THE INVENTION

It is an object of the present invention to provide a visual display apparatus which allows annotations to displayed information to be clearly and easily differentiated from that information.

### STATEMENT OF THE INVENTION

In accordance with the present invention, a visual display apparatus comprises a visual display means, and a controller for controlling the visual display means to display an image using at least two visually differentiable display modes, and is characterised in that when a first and second image are displayed together on the visual display means, the second image comprising substantially annotations of the first image, the controller automatically provides for each image to be in a different mode so that the annotations are readily discernible by visual differences between the first and second images.

It will be appreciated that this technique fully meets the requisite objects of this invention and overcomes the prior art limitations.

Conveniently, if the first image is displayed in monochrome mode, then the second image can be in a dither pattern mode.

Similarly, if the first image is displayed in a given grey mode, i.e. appears as a given grey in a grey scale, then the second image can be in a different grey mode, i.e. appears as a different grey. Still further, if the first image is displayed in a given colour mode, then the second image can be displayed in a different colour mode, i.e. the two images appear in different colours.

In another aspect of the invention, a method of controlling a visual display apparatus (1) comprises a visual display means (2) having visually differentiable display modes by using a controller (12) for controlling the visual display means (2) to display an image using at least two of said visually differentiable display modes, and an input device (3) enabling a user to input an image in a first of said display modes and enabling the user to input an annotation to said image, characterised by the further completion of steps in the following order:
the controller (12) causing a first image (20) to be displayed by the apparatus (1) in said first display mode;
the controller (12) receiving said annotation to said image;
the controller (12) causing said received annotation to said image to be displayed automatically by the apparatus (I) as a second image (21) in one of said at least two visually differentiable display modes together with said first image (20) on the visual display means (2), so that the annotations are readily discernible from the image by visual differences between the first and second display modes.

### BRIEF DESCRIPTION OF THE DRAWINGS

An embodiment of the invention will now be further described with reference to the accompanying drawings in which:-
Figure 1 is a plan view of a visual display apparatus in accordance with the present invention;
Figure 2 is a schematic block diagram illustrating the major components of such a visual display apparatus ;
Figure 3 provides a typical depiction of what might be displayed by such an apparatus.

### DETAILED DESCRIPTION

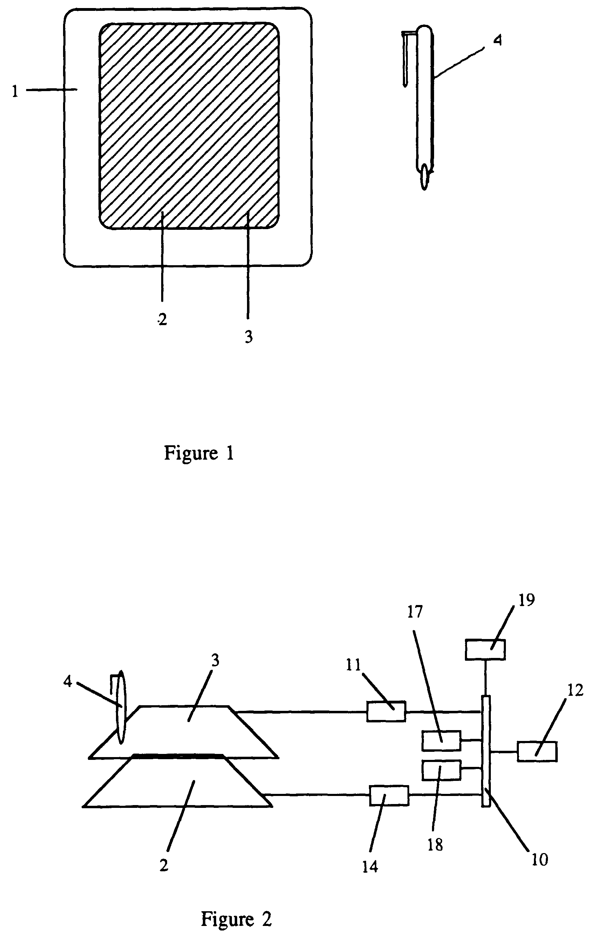

Referring now to Figure 1, a display means 2, preferably comprising a LCD type display, is shown forming part of a visual display apparatus indicated generally at 1. The input means for the apparatus comprises a translucent transducer pad 3 overlaying the display 2, together with a stylus 4. The pad 3 is an Indium Tin Oxide (ITO) device which is well known in this art . It is operable to supply a signal indicative of the position at which the stylus 4 touches the pad 3 and allows the user to easily and naturally input graphical information for storage and subsequent, although nearly immediate, display by the apparatus.

It will be appreciated that a variety of components, e.g. a power supply, is necessary for the functioning of the apparatus and will have to be present in the apparatus but these are not expressly detailed here in the interests of brevity and clarity.

Referring now to Figure 2, the transducer ITO pad 3 is shown schematically overlaying the LCD type display 2. The stylus 4 is touching the pad 3 and electrical signals indicative of the position (X Y Co-ordinates) at which it contacts the pad 3 are supplied from the stylus 4 to an A to D converter 11 feeding a data path or system bus 10.

As an alternative to the ITO approach, reference may be made to an inductive system developed byWacom Co. Ltd (not shown). In such a system, an LCD type display has superposed on it an array of successively energisable induction loops. A stylus is provided which incorporates a tuning circuit which resonates at a frequency specific to a given loop, thereby identifying the position of the stylus with respect to the display. Further reference may be made to US-4848496-A.

Returning to Figure 2, a CPU 12 is connected for bi-directional data flow to the bus 10, as is a RAM 17. A ROM 18 is also connected to bus 10, being programmed with the operating system for the apparatus. CPU 12 provides all control signals via bus 10. RAM 17 stores the user input (i.e. the annotations) in locations dependent on and associated with the image which is annotated. RAM 17 may be an EEPROM or magnetic bubble memory. CPU 12 may be a microprocessor such as the 8088 manufactured by Intel Corporation. In addition there is provided a parallel data interface 19 connected to bus 10 for sending and receiving information. A display driver 14 is connected to bus 10 and drives the display 2. The display driver 14 can drive the display 2 in any of the available modes. If the present embodiment uses a monochrome screen then the available modes are monochrome and a variety of dither pattern modes. The user can select what image or parts of an image are displayed in which mode. There are a variety of ways of allowing the user to communicate this choice to the apparatus. Commonly, the most convenient would be by arranging for a drop down menu to be available from which the user could make a choice of what mode was selected. The image to be displayed in that mode may be selected by a variety of conventional techniques, the most common being to drag the cursor over the required portions. Conveniently, the user may make a choice of which mode to use prior to inputting any information, such as annotations.

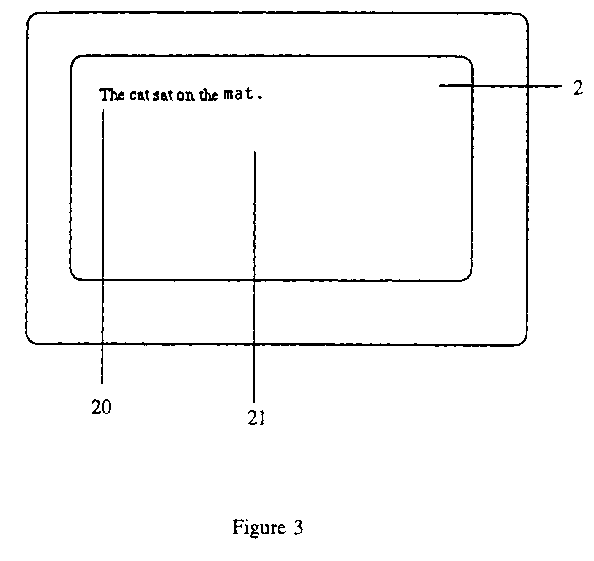

In use, the user may, for example, have supplied to his or her apparatus a draft letter for approval. This would be sent via the parallel interface 19 from a typist and would be stored in RAM 17 and cause an appropriate control signal to issue from the driver 14 to result in an appropriate image 20 to be displayed on the display 2. The user may have set up the apparatus so that unannotated information such as draft text is displayed as black type 20 on a white background. The user then selects, from a drop down menu, the mode in which his or her annotations 21 will appear and be stored at RA.M 17 . For example, a dither pattern, emulating a light grey, is chosen in the example illustrated in Figure 3.
The user then inputs the information using the stylus. The manuscript annotations 21 appear displayed by the display 2 immediately underneath the points on the ITO pad 3 they would have appeared on were the ITO a piece of paper and the stylus 4 a pen. Those annotations 21 appear as light grey manuscript amendments apparently on top of the black text 20 they are associated with. The composite document comprising original text and annotations is stored in RAM 17 and a copy may be sent via parallel interface 19 to the typist for the necessary amendments to be made.

## Claims

1. Visual display apparatus [1] comprising a visual display means [2], and a controller [12] for controlling the visual display means [2] to display an image using at least two visually differentiable display modes,
characterised in that when a first [20] and second [21] image are displayed together on the visual display means [2], the second image[21] comprising substantially annotations of the first image [20], the controller [12] automatically provides for each image to be in a different mode so that the annotations are readily discernible by visual differences between the first [20] and second [21] images.

2. Visual display apparatus [1] as claimed in Claim 1 wherein the first display mode is monochrome mode and the second display mode is a dither pattern mode.

3. Visual display apparatus as claimed in Claim 1 wherein the first display mode is a first grey and the second display mode is a different grey.

4. Visual display apparatus as claimed in Claim 1 wherein the controller [12] is adapted to enable a user to select the display mode in which annotations are to be displayed from a selection of different visually differentiable display modes prior to the display of the first image.

5. Visual display apparatus as claimed in Claim 1 wherein first display mode is a first colour and the second display mode is a different colour.

6. Visual display apparatus as claimed in any preceding Claim further comprising a data input means [3] overlaying, underlying or integral with the visual display means [2] and co-operating with a manually movable stylus member [4] whereby the stylus [4] is operable to allow graphical data input by a user.

7. A a method of controlling a visual display apparatus (1) comprising a visual display means (2) having visually differentiable display modes by using a controller (12) for controlling the visual display means (2) to display an image using at least two of said visually differentiable display modes, and an input device (3) enabling a user to input an image in a first of said display modes and enabling the user to input an annotation to said image, characterised by the further completion of steps in the following order:
the controller (12) causing a first image (20) to be displayed by the apparatus (1) in said first display mode;
the controller (12) receiving said annotation to said image;
the controller (12) causing said received annotation to said image to be displayed automatically by the apparatus (1) as a second image (21) in one of said at least two visually differentiable display modes together with said first image (20) on the visual display means (2), so that the annotations are readily discernible from the image by visual differences between the first and second display modes.

8. The method of Claim 7 wherein the annotation is displayed in the second display mode without the selection of that second display mode after the image has been input.

9. The method of claim 7 further comprising the step of selecting the second display mode, the step of selecting the second display mode comprising the step of a user selecting the second display mode from a set of display modes prior to the step of displaying the image in the first display mode.

## Patentansprüche

1. Gerät zur visuellen Ausgabe (1), bestehend aus einer visuellen Anzeigeeinheit (2) und einer Steuereinheit (12) zur Steuerung der visuellen Anzeigeeinheit (2) zur Ausgabe eines Bildes in wenigstens 2 optisch unterscheidbaren Anzeigemodi.
Das Gerät zeichnet sich dadurch aus, daß, wenn ein erstes Bild (20) und ein zweites Bild (21) gleichzeitig auf der visuellen Anzeigeeinheit (2) dargestellt werden sollen, wobei das zweite Bild (21) im wesentlichen Kommentare zum ersten Bild (20) enthält, die Steuereinheit (12) automatisch dafür sorgt, daß jedes Bild in einem anderen Anzeigemodus dargestellt wird, so daß die Anmerkungen dank optischer Unterschiede zwischen dem ersten Bild (20) und dem zweiten Bild (21) leicht zu unterscheiden sind.

2. Gerät zur visuellen Ausgabe (1) wie unter Patentanspruch 1, bei dem der erste Anzeigemodus ein monochromer Modus und der zweite Anzeigemodus ein Grauton-Modus ist.

3. Gerät zur visuellen Ausgabe (1) wie unter Patentanspruch 1, bei dem der erste Anzeigemodus einen ersten Grauton und der zweite Anzeigemodus einen anderen Grauton beinhaltet.

4. Gerät zur visuellen Ausgabe (1) wie unter Patentanspruch 1, bei dem die Steuereinheit (12) dazu geeignet ist, es dem Anwender zu ermöglichen, vor der Anzeige des ersten Bildes aus verschiedenen optisch unterscheidbaren Anzeigemodi einen Modus auszuwählen, in dem Kommentare angezeigt werden sollen.

5. Gerät zur visuellen Ausgabe (1) wie unter Patentanspruch 1, bei dem ein erster Anzeigemodus in einer ersten Farbe und der zweite Anzeigemodus in einer anderen Farbe dargestellt wird.

6. Gerät zur visuellen Ausgabe (1) wie unter allen vorherigen Patentansprüchen, welches zusätzlich einen Eingabeblock (3) enthält, unterhalb der visuellen Anzeigeeinheit (2) oder in diese integriert, der mit einem manuell zu bedienenden Stylus-Element (4) zusammenarbeitet, wobei der Stylus (4) dem Anwender dazu dient, Bilddaten einzugeben.

7. Methode zur Steuerung eines Gerätes zur visuellen Ausgabe (1), bestehend aus einer visuellen Anzeigeeinheit (2) mit optisch unterscheidbaren Anzeigemodi durch den Einsatz einer Steuereinheit (12) zur Steuerung der visuellen Anzeigeeinheit (2) zur Ausgabe eines Bildes in wenigstens 2 der genannten optisch unterscheidbaren Anzeigemodi, und eines Eingabeblockes (3), wclches es dem Anwender ermöglicht, ein Bild in einem ersten der besagten Anzeigemodi einzugeben und Anmerkungen zu diesem besagten Bild einzugeben, wobei weitere Schritte in der folgenden Reihenfolge durchgeführt werden:
das Steuergerät (12) sorgt dafür, daß ein erstes Bild (20) durch das Gerät (1) im besagten ersten Anzeigemodus dargestellt wird;
das Steuergerät (12) empfängt besagte Anmerkung zu besagtem Bild;
das Steuergerät (12) sorgt dafür, daß die besagte empfangene Anmerkung zu besagtem Bild durch das Gerät (1) automatisch als ein zweites Bild (21) in einem der besagten, wenigstens zwei optisch unterscheidbaren Anzeigemodi zusammen mit besagtem ersten Bild (20) auf der visuellen Anzeigeeinheit (2) dargestellt wird, so daß die Anmerkungen aufgrund optischer Unterschiede zwischen dem ersten und dem zweiten Anzeigemodus deutlich als solche zu erkennen sind.

8. Methode wie unter Patentanspruch 7, bei der die Anmerkung im zweiten Anzeigemodus dargestellt wird, ohne daß nach der Eingabe des Bildes die Auswahl dieses zweiten Anzeigemodus erfolgt.

9. Methode wie unter Patentanspruch 7 mit dem zusätzlichen Schritt der Auswahl des zweiten Anzeigemodus, wobei die Auswahl des zweiten Anzeigemodus darin besteht, daß der Anwender vor dem Schritt der Anzeige des Bildes im ersten Anzeigemodus aus einer Auswahl von Anzeigemodi den zweiten Anzeigemodus auswählt.

## Revendications

1. Matériel d'affichage visuel [1] comprenant un équipement d'affichage visuel [2], et un contrôleur [12] pour le contrôle de l'équipement d'affichage visuel [2] afin d'afficher une image utilisant au moins deux modes d'affichages visuellement différents.
Si la première image [20] est affichée en même temps que la seconde [21] sur l'équipement d'affichage visuel [2], la seconde image [21] comprenant essentiellement des annotations de la première image [20], le contrôleur [12] affiche automatiquement les deux images en modes différents, de façon à ce que les annotations soient facilement reconnues par des différences visuelles entre la première [20] et la seconde [21] image.

2. Un matériel d'affichage visuel [1] comme revendiqué dans la revendication 1 où le premier mode d'affichage est en monochrome tandis que le deuxième mode d'affichage est en dessins tremblotants.

3. Un matériel d'affichage visuel comme revendiqué dans la revendication 1 où le premier mode d'affichage est dans un premier ton de gris tandis que le deuxième mode d'affichage est dans un ton de gris différent.

4. Un matériel d'affichage visuel comme revendiqué dans la revendication 1 où la conception du contrôleur [12] permet à l'utilisateur de choisir le mode d'affichage des annotations à partir d'une sélection de modes d'affichages visuellement différents les uns des autres, et ce, avant l'affichage de la première image.

5. Un matériel d'affichage visuel comme revendiqué dans la revendication 1 où le premier mode d'affichage est dans une première couleur tandis que le deuxième mode d'affichage est dans une couleur différente.

6. Un matériel d'affichage visuel comme revendiqué dans n'importe quelle revendication précédente avec en plus un moyen d'entrée de données [3] en dessus, en dessous ou intégré avec l'équipement d'affichage visuel [2], et coopérant avec un bras à pointe sèche déplaçable manuellement [4] où la pointe sèche [4] peut être manoeuvrée afin de permettre l'entrée de données graphiques par l'utilisateur.

7. Une méthode de contrôle d'un matériel d'affichage visuel (1) comprenant un équipement d'affichage visuel (2) avec des modes d'affichages visuellement discernables, en utilisant un contrôleur (12) pour contrôler l'équipement d'affichage visuel (2) afin d'afficher une image utilisant au moins deux des dits modes d'affichages visuellement discemables, et un dispositif d'entrée de données (3) permettant à l'utilisateur d'entrer une image dans un des dits modes d'affichage et permettant à l'utilisateur d'effectuer une annotation à la dite image, spécifiée par l'exécution dans l'ordre des étapes suivantes :
le contrôleur (12) causant l'affichage d'une première image (20) par le matériel (1) dans le dit premier mode d'affichage ;
le contrôleur (12) recevant la dite annotation à la dite image ;
le contrôleur (12) causant, par le matériel (1), l'affichage automatique de la dite annotation reçue à la dite image comme une seconde image (21) dans un des au moins deux dits modes d'affichages visuellement discernables, simultanément avec la dite première image (20) sur l'équipement d'affichage visuel (2), et ce de façon à ce que les annotations soient aisément discernables de l'image par des différences visuelles entre le premier et le deuxième mode d'affichage.

8. La méthode revendiquée dans la Revendication 7 où l'annotation est affichée dans le deuxième mode d'affichage sans la sélection de ce deuxième mode d'affichage après que l'image a été entrée.

9. La méthode revendiquée dans la Revendication 7 avec en plus l'étape de sélection du deuxième mode d'affichage, cette étape de sélection du deuxième mode d'affichage comprenant l'étape de la sélection par l'utilisateur du deuxième mode d'affichage à partir d'une série de modes d'affichages et ce, avant l'étape de l'affichage de l'image dans le premier mode d'affichage.
